# EUROPEAN PATENT APPLICATION

(11) **EP 4 831 721 A1**
(43) Date of publication of application: **28.10.2026**
(21) Application number: 25185198.6
(22) Date of filing: 25.06.2025
(51) Int. Cl.: G02B 30/25, G02B 30/56

(54) **DISPLAY DEVICE AND ELECTRONIC APPARATUS**

(30) Priority: 27.04.2025 CN 202510542804
(71) Applicant: Wuhan China Star Optoelectronics Technology Co., Ltd, Wuhan, Hubei 430079 (CN)
(72) Inventor: GUAN, Yantao, Wuhan, Hubei 430079 (CN); LIU, Fancheng, Wuhan, Hubei 430079 (CN); ZHA, Guowei, Wuhan, Hubei 430079 (CN); YUAN, Jianfeng, Wuhan, Hubei 430079 (CN)
(74) Representative: Herrero & Asociados, S.L.

(57) **Abstract**

Embodiments of the present disclosure provide a display device and an electronic apparatus. The display device, by arranging a main display panel, a transparent display panel, and a light adjustment structure, allows the light emitted from the main display panel to pass through the transparent display panel. The light emitted from the main display panel forms a first planar image through the light adjustment structure, and the light emitted from the transparent display panel forms a second planar image, which is positioned between the first planar image and the light adjustment structure. When the display device is performing display, the first planar image and the second planar image are distributed in front and rear positions, enabling human eyes to perceive a sense of spatial depth as the two images merge when watching the first planar image and the second planar image, thereby visually presenting 3D display effect.

## Description

### TECHNICAL FIELD

The present application relates to the field of display technologies, and in particular to a display device and an electronic apparatus.

### BACKGROUND

With the development of display technologies, an aerial floating display technology has emerged. The aerial floating display technology refers to projecting the images of the display panel into the air to achieve medium-free aerial floating display. This technology is widely used in fields such as healthcare, advertising, media, and automotive industries. The aerial floating display technology mainly adopts an optical waveguide flat lens, enabling the light to reconverge in the mid-air by double reflection through two layers of transparent materials arranged orthogonally. However, in the existing aerial floating display technology, the image formed by the light after passing through the flat lens is a planar image, making it impossible to achieve a 3D (three-dimensional) display effect.

Therefore, there is a technical issue of being unable to achieve 3D display for the existing display devices utilizing the aerial floating display technology.

### SUMMARY

Embodiments of the present disclosure provide a display device and an electronic apparatus, to address the technical issue of being unable to achieve 3D display for the existing display devices utilizing the aerial floating display technology.

To achieve the above objectives, in a first aspect according to the present disclosure, a display device is provided, which includes:
a main display panel;
a transparent display panel;
a light adjustment structure, disposed at a light-emitting path of the main display panel;
where a light emitted from the main display panel forms a first planar image through the light adjustment structure, a light emitted from the transparent display panel forms a second planar image, and the second planar image is located between the first planar image and the light adjustment structure.

In a second aspect according to the present disclosure, an electronic apparatus is provided, which includes the display device as described in any of the above embodiments.

Embodiments of the present disclosure provide a display device and an electronic apparatus. The display device, by arranging a main display panel, a transparent display panel, and a light adjustment structure, allows the light emitted from the main display panel to pass through the transparent display panel. The light emitted from the main display panel forms a first planar image through the light adjustment structure, and the light emitted from the transparent display panel forms a second planar image, which is positioned between the first planar image and the light adjustment structure. When the display device is performing display, the first planar image and the second planar image are distributed in front and rear positions, enabling the human eyes to perceive a sense of spatial depth as the two images merge when watching the first planar image and the second planar image, thereby visually presenting a 3D display effect.

Other features and advantages of the present disclosure will be described in detail in the following detailed description.

### BRIEF DESCRIPTION OF THE DRAWINGS

In order that the technical solution in the embodiments of the present disclosure may be explained more clearly, a brief description to the drawings required for use in the description of the embodiments will be given below. Obviously, the drawings in the following description are merely some of the embodiments of the present disclosure, and other drawings can be made from these drawings without involving any inventive effort to those skilled in the art.

In order to fully understand the present disclosure and beneficial effects thereof, the description will be given below in conjunction with the drawings, and the same reference numbers in the description below indicate the same parts in the drawings.
FIG. 1 is a schematic diagram of a first type of a display device according to embodiments of the present disclosure.
FIG. 2 is a schematic diagram of a second type of a display device according to embodiments of the present disclosure.
FIG. 3 is a schematic diagram of a third type of a display device according to embodiments of the present disclosure.
FIG. 4 is a schematic diagram of a fourth type of a display device according to embodiments of the present disclosure.
FIG. 5 is a schematic diagram of a fifth type of a display device according to embodiments of the present disclosure.
FIG. 6 is a schematic diagram of a sixth type of a display device according to embodiments of the present disclosure.
FIG. 7 is a schematic diagram of a seventh type of a display device according to embodiments of the present disclosure.
FIG. 8 is a schematic diagram of a eighth type of a display device according to embodiments of the present disclosure.
FIG. 9 is a schematic diagram of a ninth type of a display device according to embodiments of the present disclosure.
FIG. 10 is a schematic diagram of a reversing mirror according to embodiments of the present disclosure.
FIG. 11 is a schematic diagram of a main display panel according to embodiments of the present disclosure.

Reference numerals:

1, display device; 11, main display panel; 111, first planar image; 12, transparent display panel; 121, second planar image; 13, light adjustment structure; 131, reflective polarizer; 132, reversing mirror; 133, quarter-wave plate; 134, transmissive direction-reversing mirror; 135, semi-transparent and semi-reflective mirror; 14, light; 15, housing; 16, virtual triangle; 21, display layer; 22, polarizer.

### DETAILED DESCRIPTION

The technical solution in the embodiments of the present disclosure will be clearly and completely described with reference to the accompanying drawings. Obviously, the described embodiments are only part of the embodiments of the present disclosure, not all of the embodiments. Based on the embodiments in the present disclosure, all other embodiments obtained by those skilled in the art without involving any inventive effort fall within the protection scope of the present disclosure.

Embodiments of the present disclosure provide a display device and an electronic apparatus, to address the technical issue of being unable to achieve 3D display for the existing display devices utilizing the aerial floating display technology.

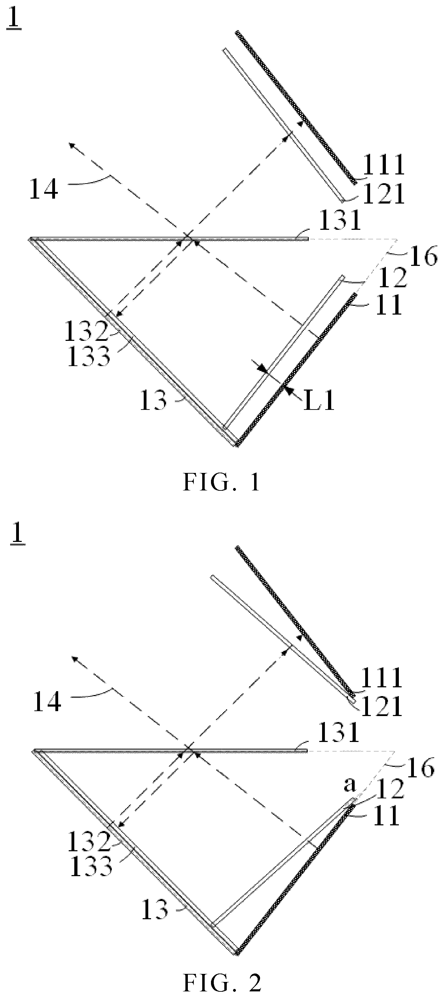

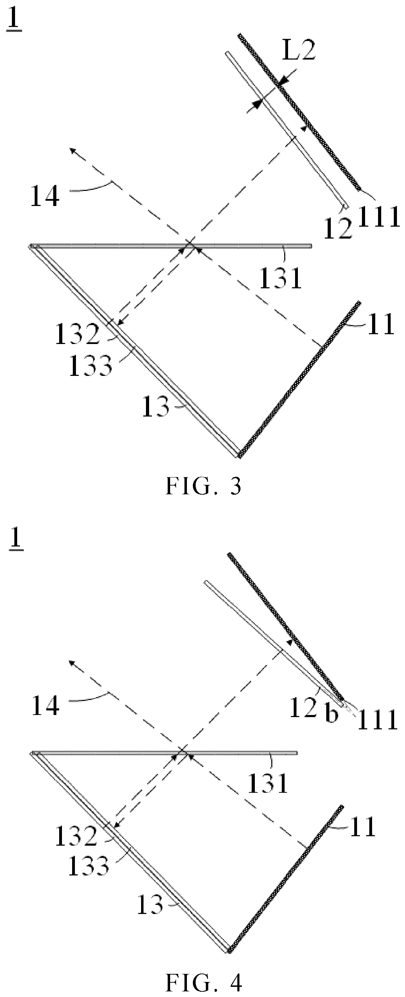

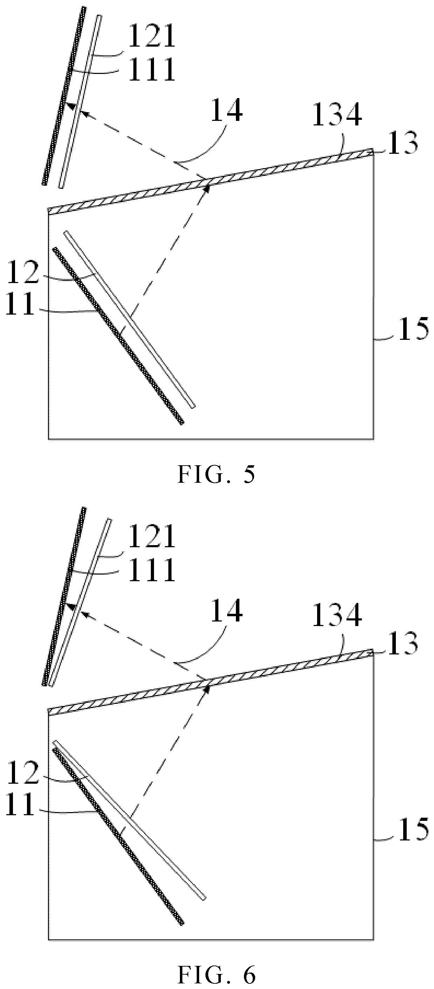

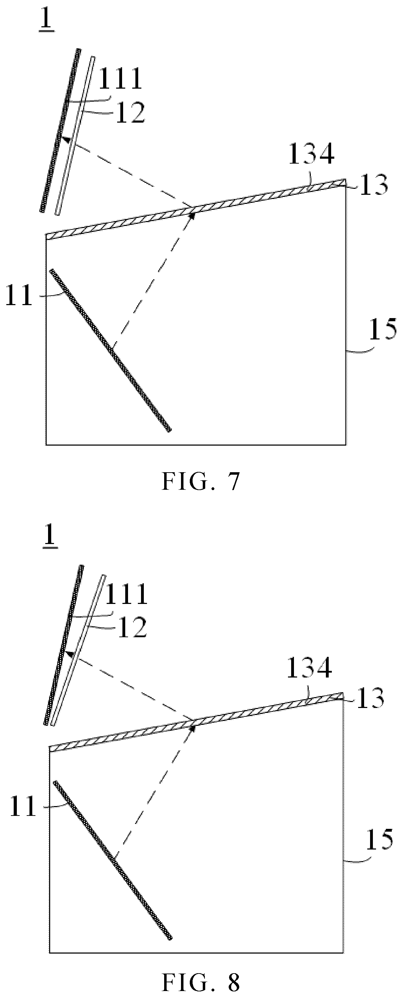

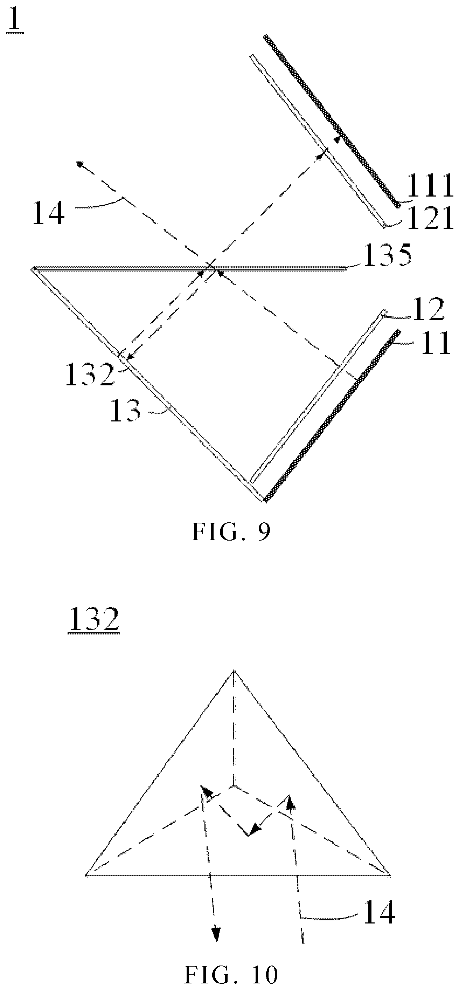

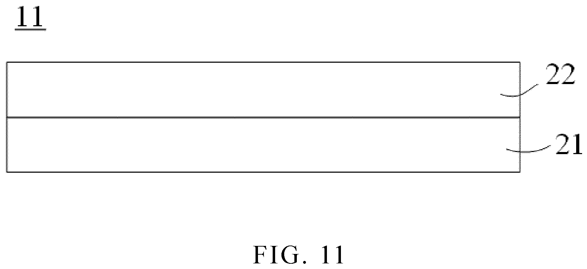

FIG. 1 is a schematic diagram of a first type of a display device according to embodiments of the present disclosure. FIG. 2 is a schematic diagram of a second type of a display device according to embodiments of the present disclosure. FIG. 3 is a schematic diagram of a third type of a display device according to embodiments of the present disclosure. FIG. 4 is a schematic diagram of a fourth type of a display device according to embodiments of the present disclosure. FIG. 5 is a schematic diagram of a fifth type of a display device according to embodiments of the present disclosure. FIG. 6 is a schematic diagram of a sixth type of a display device according to embodiments of the present disclosure. FIG. 7 is a schematic diagram of a seventh type of a display device according to embodiments of the present disclosure. FIG. 8 is a schematic diagram of a eighth type of a display device according to embodiments of the present disclosure. FIG. 9 is a schematic diagram of a ninth type of a display device according to embodiments of the present disclosure. FIG. 10 is a schematic diagram of a reversing mirror according to embodiments of the present disclosure. FIG. 11 is a schematic diagram of a main display panel according to embodiments of the present disclosure.

As shown in FIG. 1 to FIG. 9, embodiments of the present disclosure provide a display device. The display device 1 includes a main display panel 11, a transparent display panel 12 and a light adjustment structure 13, where the light adjustment structure 13 is disposed at a light-emitting path of the main display panel 11;

where a light emitted from the main display panel 11 forms a first planar image 111 through the light adjustment structure 13, a light emitted from the transparent display panel 12 forms a second planar image 121, and the second planar image 121 is located between the first planar image 111 and the light adjustment structure 13.

Embodiments of the present disclosure provide a display device. The display device 1, by arranging a main display panel 11, a transparent display panel 12, and a light adjustment structure 13, allows the light emitted from the main display panel 11 to pass through the transparent display panel 12. The light emitted from the main display panel 11 forms a first planar image 111 through the light adjustment structure 13, and the light emitted from the transparent display panel 12 forms a second planar image 121, which is positioned between the first planar image 111 and the light adjustment structure 13. When the display device 1 is performing display, the first planar image 111 and the second planar image 121 are distributed in front and rear positions, enabling the human eyes to perceive a sense of spatial depth as the two images merge when watching the first planar image 111 and the second planar image 121, thereby visually presenting a 3D display effect.

Specifically, the main display panel 11 may be one of an liquid crystal display panel, an Organic Light-Emitting Diode (OLED) display panel and a micro light-emitting diode.

Specifically, the transparent display panel 12 may be a light-transmissive display panel, such as one of a light-transmissive liquid crystal display panel, an OLED display panel, and a micro light-emitting diode display panel.

Specifically, it can be seen that there is a distance between the first planar image 111 and the second planar image 121.

Specifically, the transparent display panel 12 is configured to transmit the light, emitted from the main display panel 11, through the transparent display panel 12 when the main display panel 11 is displayed. The light adjustment structure 13 is configured to adjust the angle of the light emitted from the main display panel 11.

Specifically, the light adjustment structure 13 may adjust the light emitted from the main display panel 11, so that the light emitted from the main display panel 11 is imaged in the air to realize floating display.

Specifically, it is understandable that, compared to the existing display device utilizing aerial floating display technology, which has only one display panel, and the light emitted by this one display panel forms a planar image after passing through a flat lens, thus failing to achieve a 3D display effect. In the embodiments of the present disclosure, images are formed separately through the main display panel and the transparent display panel, allowing the images formed by the main display panel and the transparent display panel to be combined and create a sense of spatial depth during display, thereby achieving a 3D display effect.

For example, when a "person image" having a "background picture" is displayed, in the floating image displayed by the existing display device, the "background picture" and the "person image" are displayed in the same plane, so that the image is a planar image when viewed by the human eyes. However, in the embodiments of the present disclosure, the "background picture" may be displayed through the transparent display panel, and the "person image" may be displayed through the main display panel. Since the "background picture" and the "person image" are displayed in different planes, a certain spatial depth would be exhibited after the "background picture" and the "person image" are combined, and the "background picture" would be presented spatially behind the "person image" when displayed, thereby achieving a 3D display effect.

In some embodiments, as shown in FIG. 1 to FIG. 4, the light adjustment structure 13 includes a reversing mirror 132, a reflective polarizer 131, and a quarter-wave plate 133; the reflective polarizer 131 is disposed at a light-emitting path of the main display panel 11; the quarter-wave plate 133 is disposed at a side of the reversing mirror 132 close to the reflective polarizer 131;

where a projection of the reflective polarizer 131, a projection of the reversing mirror 132, and a projection of the main display panel 11 at a same plane are respectively located at three sides of a virtual triangle 16. By making the light adjustment structure 13 include the reflective polarizer 131 and the reversing mirror 132, the light through the reflective polarizer 131 and the quarter-wave plate 133 would be converted into a light that can pass through the reflective polarizer 131 , thereby reducing light loss and improving the display effect.

Specifically, the projection of the reflective polarizer 131, the projection of the reversing mirror 132, and the projection of the main display panel 11 in the same plane are respectively located at three sides of the virtual triangle 16, and the included angle between the sides on which the structures are located may be set according to the requirements.

Specifically, the reflective polarizer 131 includes a reflective layer and a polarizing layer, and the reflective polarizer 131 may reflect the light of a specific wavelength and change its polarization direction. Specifically, the reflective polarizer 131 may transmit a part of the light and reflect a part of the light. For example, when the light emitted from the main display panel 11 is natural light, the reflective polarizer 131 may transmit a part of the natural light and reflect a part of the natural light; or, when the light emitted from the main display panel 11 is polarized light, the reflective polarizer 131 may transmit a part of the polarized light having a specific wavelength and reflect a part of the polarized light; or, when the light emitted from the main display panel 11 is natural light, the reflective polarizer 131 may transmit the polarized light with a certain direction and reflect the polarized light with a certain direction.

Specifically, the reflective polarizer 131 may selectively transmit parallel polarized light (i.e. p-light) and reflect vertically polarized light (i.e. s-light).

Specifically, the light emitted from the main display panel 11 may be the natural light or the polarized light.

Specifically, for example, as shown in FIG. 1, when the light emitted from the main display panel 11 is the natural light, the light 14 is irradiated on the reflective polarizer 131, the parallel polarized light would pass through the reflective polarizer 131, the vertical polarized light would be reflected to the quarter-wave plate 133 by the reflective polarizer 131, and then is emitted to the reversing mirror 132 and reflected back to the quarter-wave plate 133 by the reversing mirror 132. At this point, the vertical polarized light becomes parallel polarized light after passing through the quarter-wave plate 133 twice, allowing the parallel polarized light to pass through the reflective polarizer 131 to form the first planar image 111, thereby reducing light loss and enhancing the display effect.

Specifically, the light emitted from the main display panel 11 may further be polarized light, specifically vertically polarized light, so that the light would not pass through the reflective polarizer 131when irradiating to the reflective polarizer 131 for the first time, thereby reducing the light loss. However, the light would be completely emitted when irradiating to the reflective polarizer 131 again through the quarter-wave plate 133 and the reversing mirror 132 since the light is the parallel polarized light, thereby reducing the light loss.

Specifically, as shown in FIG. 10, the reversing mirror 132 may be a pyramid, but the embodiments of the present application is not limited thereto, and the reversing mirror 132 may be another structure capable of realizing the function of the reversing mirror 132. As shown in FIG. 6, it can be seen that the three sides of the reversing mirror 132 are perpendicular to each other, and the light 14 irradiates on one side surface after entering from the bottom surface, and is reflected to another side surface, and then is reflected again to the third side surface, and finally is emitted out from the bottom surface.

In some embodiments, as shown in FIG. 1, FIG. 2, FIG. 5, FIG. 6, and FIG. 9, the transparent display panel 12 is disposed between the light adjustment structure 13 and the main display panel 11, and the light adjustment structure 13 is configured to adjust the angle of light emitted by the transparent display panel 12. By arranging the transparent display panel 12 between the light adjustment structure 13 and the main display panel 11, the light adjustment structure is configured to adjust the angle of the light emitted from the transparent display panel 12, so that the light emitted from the transparent display panel 12 and the main display panel 11 form the second planar image 121 and the first planar image 111 respectively through the light adjustment structure 13, and the first planar image 111 and the second planar image 121 are not in the same plane, thereby presenting a spatial depth when displaying, and realizing a 3D display effect.

Specifically, as shown in FIG. 1 and FIG. 2, the transparent display panel 12 is disposed between the reflective polarizer 131 and the main display panel 11, as shown in FIG. 9, the transparent display panel 12 is disposed between the semi-transparent and semi-reflective mirror 135 and the main display panel 11, and as shown in FIG. 5 and FIG. 6, the transparent display panel 12 is disposed between the transmissive direction-reversing mirror 134 and the main display panel 11.

Specifically, as shown in FIG. 1, FIG. 5, and FIG. 9, the transparent display panel 12 and the main display panel 11 are disposed opposite to each other, and the distance between the plane where the transparent display panel 12 is located and the plane where the main display panel 11 is located is greater than or equal to 5 mm and less than or equal to 50 mm.

Specifically, as shown in FIG. 2 and FIG. 6, an included angle a between the plane where the transparent display panel 12 is located and the plane where the main display panel 11 is located is greater than 0 degree, and less than or equal to 10 degrees.

Specifically, the transparent display panel 12 and the main display panel 11 may be arranged in parallel.

Specifically, the light emitted by the transparent display panel 12 may be the natural light, or may be the polarized light. When the light emitted from the transparent display panel 12 passes through the light adjustment structure 13, the light path of the light may refer to the light path of the light emitted from the main display panel 11 and passing through the light adjustment structure 13. For example, when the light emitted by the transparent display panel 12 is the natural light, the light is irradiated on the reflective polarizer 131, the parallel polarized light would pass through the reflective polarizer 131, the vertical polarized light would be reflected to the quarter-wave plate 133 by the reflective polarizer 131, and then is emitted to the reversing mirror 132 and reflected back to the quarter-wave plate 133 by the reversing mirror 132. At this point, the vertical polarized light becomes parallel polarized light after passing through the quarter-wave plate 133 twice, allowing the parallel polarized light to pass through the reflective polarizer 131 to form the second planar image 121.

In some embodiments, as shown in FIG. 3, FIG. 4, FIG. 7, and FIG. 8, the transparent display panel 12 and the main display panel 11 are provided on both sides of the light adjustment structure 13. By arranging the transparent display panel 12 and the main display panel 11 on both sides of the light adjustment structure 13, the light emitted by the transparent display panel 12 does not need to pass through the light adjustment structure 13, and the second planar image 121 displayed by the transparent display panel 12 and the first planar image 111 are not in the same plane, so that the spatial depth is exhibited during display, and the 3D display effect is realized.

Specifically, as shown in FIG. 3 and FIG. 4, the transparent display panel 12 and the main display panel 11 are disposed at both sides of the reflective polarizer 131, and as shown in FIG. 7 and FIG. 8, the transparent display panel 12 and the main display panel 11 are disposed at both sides of the transmissive direction-reversing mirror 134.

In some embodiments, as shown in FIG. 3, FIG. 4, FIG. 7, and FIG. 8, the transparent display panel 12 is disposed between the light adjustment structure 13 and the first planar image 111. By arranging the transparent display panel 12 between the light adjustment structure 13 and the first planar image 111, the second planar image 121 displayed on the transparent display panel 12 and the first planar image 111 are not in the same plane, and the spatial depth is exhibited during display, thereby realizing a 3D display effect.

Specifically, the light transmittance of the transparent display panel is greater than or equal to 20% and less than or equal to 99%, and specifically, the light transmittance of the transparent display panel is greater than or equal to 30% and less than or equal to 90%.

In some embodiments, as shown in FIG. 3 and FIG.7, the distance L2 between the transparent display panel 12 and the first planar image 111 is greater than or equal to 5 mm and less than or equal to 50 mm. By making the distance between the transparent display panel 12 and the first planar image 111 greater than or equal to 5 mm and less than or equal to 50 mm, there is a certain distance between the first planar image 111 and the second planar image 121, it is possible to present a 3D display effect during display, and avoid image separation or poor display caused by excessive distance between the first planar image 111 and the second planar image 121.

In some embodiments, as shown in FIG. 4 and FIG. 8, an included angle b between the plane where the transparent display panel 12 is located and the plane where the first planar image 111 is located is greater than 0 degree, and less than or equal to 10 degrees.

In some embodiments, as shown in FIG. 1, the transparent display panel 12 is disposed between the reflective polarizer 131 and the main display panel 11, and the plane where the transparent display panel 12 is located and the plane where the main display panel 11 is located are arranged in parallel and at intervals; or, the plane where the transparent display panel 12 is located intersects with the plane where the main display panel 11 is located. By arranging the transparent display panel 12 between the reflective polarizer 131 and the main display panel 11, the light emitted from the transparent display panel 12 and the main display panel 11 form the second planar image 121 and the first planar image 111 respectively through the reflective polarizer 131, and there is a distance between the first planar image 111 and the second planar image 121, so that the spatial depth is presented durign display, and the 3D display effect is realized.

Specifically, as shown in FIG. 1, the plane where the transparent display panel 12 is located and the plane where the main display panel 11 is located are arranged in parallel and at intervals. As shown in FIG. 2, the plane where the transparent display panel 12 is located intersects with the plane where the main display panel 11 is located.

In some embodiments, as shown in FIG. 1, the distance L1 between the plane where the transparent display panel 12 is located and the plane where the main display panel 11 is located is greater than or equal to 5 mm and less than or equal to 50 mm. By making the distance between the plane where the transparent display panel 12 is located and the plane where the main display panel 11 is located more than or equal to 5 mm and less than or equal to 50 mm, so that there is a certain distance between the images formed by the two, thereby presenting a spatial depth during display, realizing a 3D display effect, and the image formed by the transparent display panel is clearly visible.

In some embodiments, as shown in FIG. 2, an included angle a between the plane where the transparent display panel is located and the plane where the main display panel is located is greater than 0 degree, and less than or equal to 10 degrees.

Specifically, the plane where the transparent display panel 12 is located may be determined according to the center plane of the transparent display panel 12, or the plane where the transparent display panel 12 is located may be determined according to the surface of the transparent display panel 12, and similarly, the plane where the main display panel 11 is located may be determined.

In some embodiments, as shown in FIG. 3 and FIG. 4, the transparent display panel 12 and the main display panel 11 are disposed on both sides of the reflective polarizer 131, and the plane where the transparent display panel 12 is located and the plane where the first planar image 111 is located are arranged in parallel and at intervals; or, the plane where the transparent display panel 12 is located intersects with the plane where the first planar image 111 is located. By arranging the transparent display panel 12 and the main display panel 11 on both sides of the reflective polarizer 131, the light emitted by the transparent display panel 12 does not need to pass through the reflective polarizer 131, and the second planar image 121 displayed by the transparent display panel 12 and the first planar image 111 are arranged at intervals, so that the spatial depth is exhibited during display, and the 3D display effect is realized.

Specifically, as shown in FIG. 3, the plane where the transparent display panel 12 is located and the plane where the first planar image 111 is located are arranged in parallel and at intervals; As shown in FIG. 4, the plane where the transparent display panel 12 is located intersects with the plane where the first planar image 111 is located.

In some embodiments, as shown in FIG. 3, when the transparent display panel 12 and the main display panel 11 are disposed on both sides of the reflective polarizer 131, the distance L2 between the plane where the transparent display panel 12 is located and the plane where the first planar image 111 is located is greater than or equal to 5 mm and less than or equal to 50 mm. By making the distance between the plane where the transparent display panel 12 is located and the plane where the first planar image 111 is located greater than or equal to 5 mm and less than or equal to 50 mm, so that there is a certain distance between the images formed by the two, thereby presenting a spatial depth during display, realizing a 3D display effect, and the image formed by the transparent display panel is clearly visible.

In some embodiments, as shown in FIG. 4, an included angle b between the plane where the transparent display panel 12 is located and the plane where the first planar image 111 is located is greater than 0 degree, and less than or equal to 10 degrees.

In some embodiments, as shown in FIG. 1 to FIG. 4, the included angle between the projection of the reflective polarizer 131 and the projection of the main display panel 11 at a same plane is in a range of 25 degrees to 75 degrees. By making the included angle between the projection of the reflective polarizer 131 and the projection of the main display panel 11 in the same plane in a range of 25 degrees to 75 degrees, the light can be emitted from the reflective polarizer 131, and light loss is avoided.

Specifically, the included angle between the projection of the reflective polarizer 131 and the projection of the main display panel 11 in the same plane may be 45 degrees.

Specifically, the included angle between the projection of the reflective polarizer 131 and the projection of the main display panel 11 in the same plane may be in a range of 25 degrees to 45 degrees, or the included angle between the projection of the reflective polarizer 131 and the projection of the main display panel 11 in the same plane may be in a range of 45 degrees to 75 degrees.

In some embodiments, as shown in FIG. 11, the main display panel 11 includes one of a liquid crystal display panel and an organic light-emitting diode display panel; or, the main display panel includes a micro light-emitting diode display panel, which including a polarizing plate 22, and the polarizing plate 22 is disposed at a side close to the light adjustment structure 13. By making the main display panel 11 include a polarizing plate 22 disposed at a side close to the light adjustment structure 13, the main display panel 11 may emit polarized light. Specifically, when the main display panel 11 includes a liquid crystal display panel and an organic light-emitting diode display panel, the liquid crystal display panel and the organic light-emitting diode display panel have a polarizing plate, so that there is no need to additionally provide an polarizing plate; and the polarizing plate 22 may be provided when the main display panel 11 is a micro light-emitting diode display panel, so that the main display panel 11 may emit polarized light.

Specifically, as shown in FIG. 11, the main display panel 11 may include a display layer 21 and a polarizing plate 22.

In some embodiments, as shown in FIG. 5 to FIG. 8, the light adjustment structure 13 includes a transmissive direction-reversing mirror 134, which is disposed on the light-emitting path of the main display panel 11. By arranging the transmissive direction-reversing mirror 134, the light emitted from the main display panel 11 forms a floating image at a symmetrical position through the transmissive direction-reversing mirror 134, thereby realizing floating display.

Specifically, as shown in FIG. 5 to FIG. 8, the light emitted from the main display panel 11 would form a floating image at a symmetrical position through the transmissive direction-reversing mirror 134, that is, the first planar image 111 and the main display panel 11 are symmetrical with respect to the transmissive direction-reversing mirror 134 when the thickness is not considered.

Specifically, the transmissive direction-reversing mirror 134 may be a flat lens.

In some embodiments, as shown in FIG. 5 and FIG. 6, the transparent display panel 12 is disposed between the transmissive direction-reversing mirror 134 and the main display panel 11, and the plane where the transparent display panel 12 is located and the plane where the main display panel 11 is located are arranged in parallel and at intervals; or, the plane where the transparent display panel 12 is located intersects with the plane where the main display panel 11 is located. By arranging the transparent display panel 12 between the transmissive direction-reversing mirror 134 and the main display panel 11, the light emitted from the transparent display panel 12 and the main display panel 11 form the second planar image 121 and the first planar image 111 respectively through the transmissive direction-reversing mirror 134, and there is a distance between the first planar image 111 and the second planar image 121, thereby presenting a spatial depth during display, and realizing a 3D display effect.

In some embodiments, as shown in FIG. 5, the distance between the plane where the transparent display panel 12 is located and the plane where the main display panel 11 is located is greater than or equal to 5 mm and less than or equal to 50 mm. By making the distance between the plane where the transparent display panel 12 is located and the plane where the main display panel 11 is located more than or equal to 5 mm and less than or equal to 50 mm, so that there is a certain distance between the images formed by the two, thereby presenting a spatial depth during display, realizing a 3D display effect, and the image formed by the transparent display panel is clearly visible.

In some embodiments, as shown in FIG. 6, an included angle between the plane where the transparent display panel 12 is located and the plane where the main display panel 11 is located is greater than 0 degree, and less than or equal to 10 degrees.

Specifically, the plane where the transparent display panel 12 is located may be determined according to the center plane of the transparent display panel 12, or the plane where the transparent display panel 12 is located may be determined according to the surface of the transparent display panel 12, and similarly, the plane where the main display panel 11 is located may be determined.

In some embodiments, as shown in FIG. 7 and FIG. 8, the transparent display panel 12 and the main display panel 11 are disposed on both sides of the transmissive direction-reversing mirror 134, and the plane where the transparent display panel 12 is located and the plane where the first planar image 111 is located are arranged in parallel and at intervals; or the plane where the transparent display panel is located intersects with the plane where the first planar image is located. By arranging the transparent display panel 12 and the main display panel 11 on both sides of the transmissive direction-reversing mirror 134, the light emitted by the transparent display panel 12 does not need to pass through the transmissive direction-reversing mirror 134, and the second planar image 121 displayed by the transparent display panel 12 and the first planar image 111 are arranged at intervals, so that the spatial depth is exhibited during display, and the 3D display effect is realized.

In some embodiments, as shown in FIG. 7, the distance between the plane where the transparent display panel 12 is located and the plane where the first planar image 111 is located is greater than or equal to 5 mm and less than or equal to 50 mm. By making the distance between the plane where the transparent display panel 12 is located and the plane where the first planar image 111 is located greater than or equal to 5 mm and less than or equal to 50 mm, so that there is a certain distance between the images formed by the two, thereby presenting a spatial depth during display, realizing a 3D display effect, and the image formed by the transparent display panel is clearly visible.

In some embodiments, as shown in FIG. 8, an included angle between the plane where the transparent display panel 12 is located and the plane where the first planar image 111 is located is greater than 0 degree, and less than or equal to 10 degrees.

In some embodiments, as shown in FIG. 5 to FIG. 8, the included angle between the projection of the transmissive direction-reversing mirror 134 and the projection of the main display panel 11 in the same plane is in a range of 25 degrees to 75 degrees. By making the included angle between the projection of the transmissive direction-reversing mirror 134 and the projection of the main display panel 11 in the same plane in a range of 25 degrees to 75 degrees, light can be emitted from the transmissive direction-reversing mirror 134, and light loss is avoided.

Specifically, the included angle between the projection of the transmissive direction-reversing mirror 134 and the projection of the main display panel 11 in the same plane may be 45 degrees.

Specifically, the included angle between the projection of the transmissive direction-reversing mirror 134 and the projection of the main display panel 11 in the same plane is in a range of 25 degrees to 45 degrees; or the included angle between the projection of the transmissive direction-reversing mirror and the projection of the main display panel in the same plane is in a range of 45 degrees to 75 degrees.

In some embodiments, as shown in FIG. 5 to FIG. 8, the display device 1 further includes a housing 15, where one side of the housing 15 is provided with an opening, the main display panel 11 is disposed in the housing 15, the transmissive direction-reversing mirror 134 is disposed at the opening of the housing 15, and the included angle between a straight line where the projection of the transmissive direction-reversing mirror 134 is located and a straight line where the projection of the main display panel 11 is located in the same plane is greater than 0 degree and less than 90 degrees. By arranging the main display panel 11 in the housing, the angle between the straight line where the projection of the transmissive direction-reversing mirror 134 is located and the straight line where the projection of the main display panel 11 is located in the same plane is greater than 0 degree and less than 90 degrees, so that light can be emitted out from the transmissive direction-reversing mirror 134 without being emitted out from other surfaces of the housing 15, and the included angle between the transmissive direction-reversing mirror 134 and the main display panel 11 is formed, so that the first planar image is not at the same straight line as the main display panel, thereby avoiding directly viewing the main display panel 11 as it affects the floating display effect.

Specifically, each surface of the housing 15 may shield light, or the inner surface of the housing 15 may reflect light.

In some embodiments, as shown in FIG. 9, the light adjustment structure 13 includes a semi-transparent and semi-reflective mirror 135 and a reversing mirror 132, the semi-transparent and semi-reflective mirror 135 is disposed on the light-emitting path of the main display panel 11, and the projection of the semi-transparent and semi-reflective mirror 135, the projection of the reversing mirror 132, and the projection of the main display panel 11 in the same plane are respectively located at three sides of the virtual triangle. By providing the semi-transparent and semi-reflective mirror 135, the structure of the light adjustment structure 13 is relatively simple, occupies a small space, and can directly reflect and transmit light.

Specifically, the semi-transparent and semi-reflective mirror 135 may transmit a part of the light and reflect a part of the light.

Specifically, for example, as shown in FIG. 1, when the light emitted from the main display panel 11 is the natural light, the light 14 is irradiated on the reflective polarizer 131, the parallel polarized light would pass through the reflective polarizer 131, the vertical polarized light would be reflected to the quarter-wave plate 133 by the reflective polarizer 131, and then is emitted to the reversing mirror 132 and reflected back to the quarter-wave plate 133 by the reversing mirror 132. At this point, the vertical polarized light becomes parallel polarized light after passing through the quarter-wave plate 133 twice, allowing the parallel polarized light to pass through the reflective polarizer 131 to form the first planar image 111. When the light adjustment structure includes the semi-transparent and semi-reflective mirror 135, loss of the light occurs when it passes through the semi-transparent and semi-reflective mirror for the first time, and after being reflected to the reversing mirror by the semi-transparent and semi-reflective mirror, part of the light reflected to the semi-transparent and semi-reflective mirror by the reversing mirror would be reflected and loss would occur, so that loss of the light would occur twice when it passes through the semi-transparent and semi-reflective mirror twice. However, when the reflective polarizer 131 and the quarter-wave plate 133 are used, the light loss may be reduced compared to the semi-transparent and semi-reflective mirror. Therefore, by arranging the reflective polarizer 131, the light loss may be reduced and the display effect may be improved.

Specifically, as shown in FIG. 1, the transparent display panel 12 and the main display panel 11 are disposed opposite to each other, the included angle between the projection of the transparent display panel 12, the projection of the main display panel 11, and the projection of the mirror 132 in the same plane may be an acute angle, a right angle, or an obtuse angle, the quarter-wave plate 133 and the reversing mirror 132 are disposed opposite to each other, the quarter-wave plate 133 may be disposed parallel to the mirror 132, and the included angle between the projection of the mirror 132 and the projection of the reflective polarizer 131 in the same plane may be an acute angle. As shown in FIG. 1, after the light 14 emitted from the main display panel 11 and the transparent display panel 12 is emitted to the reflective polarizer 131, the parallel polarized light passes through the reflective polarizer 131, and the vertical polarized light is reflected by the reflective polarizer 131 to the quarter-wave plate 133 and then passes through the quarter-wave plate 133 to be emitted to the reversing mirror 132. The light is reflected to the quarter-wave plate 133 by the reversing mirror 132, and then passes through the quarter-wave plate 133 to obtain the parallel polarized light. The parallel polarized light forms the first planar image 111 and the second planar image 121 respectively after passing through the reflective polarizer 131, so as to achieve the 3D display.

Specifically, the operation process of the display device shown in FIG. 2 may refer to the operation process of the display device shown in FIG. 1.

Specifically, as shown in FIG. 3, the transparent display panel 12 and the main display panel 11 are disposed on both sides of the reflective polarizer 131, the included angle between the projection of the main display panel 11 and the projection of the mirror 132 in the same plane may be an acute angle, a right angle, or an obtuse angle, the quarter-wave plate 133 and the reversing mirror 132 are disposed opposite to each other, the quarter-wave plate 133 may be disposed parallel to the reversing mirror 132, and the included angle between the projection of the reversing mirror 132 and the projection of the reflective polarizer 131 in the same plane may be an acute angle. As shown in FIG. 2, after the light 14 emitted from the main display panel 11 is emitted to the reflective polarizer 131, the parallel polarized light passes through the reflective polarizer 131, the vertical polarized light is reflected to the quarter-wave plate 133 by the reflective polarizer 131and then passes through the quarter-wave plate 133 and is emitted to the reversing mirror 132. The light passes through the quarter-wave plate 133 after being reflected to the quarter-wave plate 133 by the reversing mirror 132, so as to obtain the parallel polarized light. The parallel polarized light forms the first planar image 111 after passing through the reflective polarizer 131. At this point, the transparent display panel 12 emits the light to display the second planar image 121, so as to achieve 3D display.

Specifically, the operation process of the display device shown in FIG. 4 may refer to the operation process of the display device shown in FIG. 3.

Specifically, as shown in FIG. 5, the transparent display panel 12 and the main display panel 11 are disposed opposite to each other and are both disposed in the housing 15, and the included angle between the projection of the transparent display panel 12, the projection of the main display panel 11, and the projection of the transmissive direction-reversing mirror 134 in the same plane may be an acute angle. As shown in FIG. 3, after the light 14 emitted from the main display panel 11 and the transparent display panel 12 is emitted to the transmissive direction-reversing mirror 134, the light emitted from the transmissive direction-reversing mirror 134 and the incident light to the transmissive direction-reversing mirror 134 would be symmetrical with respect to the transmissive direction-reversing mirror 134, and the first planar image 111 and the second planar image 121 are formed to realize 3D display.

Specifically, the operation process of the display device shown in FIG. 6 may refer to the operation process of the display device shown in FIG. 5.

Specifically, as shown in FIG. 7, the transparent display panel 12 and the main display panel 11 are disposed on both sides of the transmissive direction-reversing mirror 134, and the included angle between the projection of the main display panel 11 and the projection of the transmissive direction-reversing mirror 134 in the same plane may be an acute angle. As shown in FIG. 4, after the light 14 emitted from the main display panel 11 is emitted to the transmissive direction-reversing mirror 134, the light emitted from the transmissive direction-reversing mirror 134 and the incident light to the transmissive direction-reversing mirror 134 would be symmetrical with respect to the transmissive direction-reversing mirror 134, and the first planar image 111 is formed, and the transparent display panel 12 would emit the light to form a second planar image 121, thereby realizing 3D display.

Specifically, the operation process of the display device shown in FIG. 8 may refer to the operation process of the display device shown in FIG. 7.

Specifically, as shown in FIG. 9, the transparent display panel 12 and the main display panel 11 are disposed opposite to each other, and the included angle between the projection of the transparent display panel 12, the projection of the main display panel 11, and the projection of the reversing mirror 132 in the same plane may be an acute angle, a right angle, or an obtuse angle, and the included angle between the projection of the reversing mirror 132 and the projection of the semi-transparent and semi-reflective mirror 135 in the same plane may be an acute angle. As shown in FIG. 5, after the light 14 emitted from the main display panel 11 and the transparent display panel 12 is emitted to the semi-transparent and semi-reflective mirror 135, part of the light passes through the semi-transparent and semi-reflective mirror 135, part of the light is reflected to the reversing mirror 132 by the semi-transparent and semi-reflective mirror 135, and the light passes through the semi-transparent and semi-reflective mirror 135 after being reflected to the semi-transparent and semi-reflective mirror 135 by the reversing mirror 132, so as to form the first planar image 111 and the second planar image 121 respectively, thereby realizing 3D display.

Specifically, the above embodiment describes the display panel in detail from the aspects of the composition of the display device, the specific design of each structure of the display device, and the like, and when there is no conflict between the embodiments, the embodiments may be combined, for example, the transparent display panel and the main display panel are disposed on both sides of the transmissive direction-reversing mirror, the plane where the transparent display panel is located and the plane where the first planar image is located are arranged in parallel and at intervals, and the distance between the plane where the transparent display panel is located and the plane where the first planar image is located is greater than or equal to 5 mm and less than or equal to 50 mm.

Meanwhile, embodiments of the present disclosure provide an electronic apparatus including the display device as described in any of the above embodiments.

Specifically, the electronic apparatus may include a case body, and the display device may be disposed in the case body.

In the description of the present disclosure, the terms "first" and "second" are used for descriptive purposes only and are not to be construed as indicating or implying relative importance or implying the number of indicated technical features. Therefore, the features defined with the "first" and "second" may explicitly or implicitly include one or more features. In the description of the present disclosure, "multiple" means two or more, unless otherwise particularly defined.

In the above-mentioned embodiments, the description of each embodiment has its own emphasis, and parts not described in detail in a certain embodiment may be referred to the related description of other embodiments.

The embodiments, implementations and related technical features of the present disclosure can be combined and replaced with each other without conflict.

The above are merely the preferred embodiments of the present disclosure, and do not impose any form of limitation to the present disclosure. Any simple modification, equivalent change and embellishment to the above embodiments based on the technical essence of the present disclosure without departing from the content of the technical solution of the present disclosure still fall within the scope of the technical solution of the present disclosure.

## Claims

1. A display device (1), **characterized in that** the display device (1) comprises:
a main display panel (11);
a transparent display panel (12);
a light adjustment structure (13), disposed at a light-emitting path of the main display panel (11);
wherein a light emitted from the main display panel (11) forms a first planar image (111) through the light adjustment structure (13), a light emitted from the transparent display panel (12) forms a second planar image (121), and the second planar image (121) is located between the first planar image (111) and the light adjustment structure (13).

2. The display device (1) according to claim 1, wherein the light adjustment structure (13) comprises:
a reversing mirror (132);
a reflective polarizer (131), disposed at the light-emitting path of the main display panel (11);
a quarter-wave plate (133), disposed at a side of the reversing mirror (132) close to the reflective polarizer (131);
wherein a projection of the reflective polarizer (131), a projection of the reversing mirror (132), and a projection of the main display panel (11) at a same plane are respectively located at three sides of a virtual triangle (16).

3. The display device (1) according to claim 2, wherein the transparent display panel (12) is disposed between the reflective polarizer (131) and the main display panel (11), and a plane where the transparent display panel (12) is located and a plane where the main display panel (11) is located are arranged in parallel and at intervals; or
the plane where the transparent display panel (12) is located intersects with the plane where the main display panel (11) is located.

4. The display device (1) according to claim 3, wherein a distance between the plane where the transparent display panel (12) is located and the plane where the main display panel (11) is located is greater than or equal to 5 mm, and less than or equal to 50 mm; or
an included angle between the plane where the transparent display panel (12) is located and the plane where the main display panel (11) is located is greater than 0 degree, and less than or equal to 10 degrees.

5. The display device (1) according to claim 2, wherein the transparent display panel (12) and the main display panel (11) are disposed at both sides of the reflective polarizer (131), and the plane where the transparent display panel (12) is located and a plane where the first planar image (111) is located are arranged in parallel and at intervals; or
the plane where the transparent display panel (12) is located intersects with the plane where the first planar image (111) is located.

6. The display device (1) according to claim 5, wherein a distance between the plane where the transparent display panel (12) is located and the plane where the first planar image (111) is located is greater than or equal to 5 mm, and less than or equal to 50mm; or
an included angle between the plane where the transparent display panel (12) is located and the plane where the first planar image (111) is located is greater than 0 degree, and less than or equal to 10 degrees.

7. The display device (1) according to claim 2, wherein an included angle between a projection of the reflective polarizer (131) and a projection of the main display panel (11) at a same plane is in a range of 25 degrees to 45 degrees; or
the included angle between a projection of the reflective polarizer (131) and a projection of the main display panel (11) at a same plane is in a range of 45 degrees to 75 degrees.

8. The display device (1) according to claim 1, wherein the light adjustment structure (13) comprises a transmissive direction-reversing mirror (134), which is disposed at the light-emitting path of the main display panel (11).

9. The display device (1) according to claim 8, wherein the transparent display panel (12) is disposed between the transmissive direction-reversing mirror (134) and the main display panel (11), and a plane where the transparent display panel (12) is located and a plane where the main display panel (11) is located are arranged in parallel and at intervals; or
the plane where the transparent display panel (12) is located intersects with the plane where the main display panel (11) is located.

10. The display device (1) according to claim 9, wherein a distance between the plane where the transparent display panel (12) is located and the plane where the main display panel (11) is located is greater than or equal to 5 mm, and less than or equal to 50 mm; or
an included angle between the plane where the transparent display panel (12) is located and the plane where the main display panel (11) is located is greater than 0 degree, and less than or equal to 10 degrees.

11. The display device (1) according to claim 8, wherein the transparent display panel (12) and the main display panel (11) are disposed at both sides of the transmissive direction-reversing mirror (134), and the plane where the transparent display panel (12) is located and a plane where the first planar image (111) is located are arranged in parallel and at intervals; or
the plane where the transparent display panel (12) is located intersects with the plane where the first planar image (111) is located.

12. The display device (1) according to claim 11, wherein a distance between the plane where the transparent display panel (12) is located and the plane where the first planar image (111) is located is greater than or equal to 5 mm, and less than or equal to 50mm; or
an included angle between the plane where the transparent display panel (12) is located and the plane where the first planar image (111) is located is greater than 0 degree, and less than or equal to 10 degrees.

13. The display device (1) according to claim 8, wherein an included angle between a projection of the transmissive direction-reversing mirror (134) and a projection of the main display panel (11) at a same plane is in a range of 25 degrees to 45 degrees; or
the included angle between the projection of the reflective polarizer (131) and the projection of the main display panel (11) at a same plane is in a range of 45 degrees to 75 degrees.

14. The display device (1) according to any of claim 1 to claim 13, wherein the main display panel (11) comprises one of a liquid crystal display panel and an organic light-emitting diode display panel; or
the main display panel (11) comprises a micro light-emitting diode display panel, which comprises a polarizer (22), wherein the polarizer (22) is disposed at a side close to the light adjustment structure (13).

15. An electronic apparatus (1), **characterized in that** the electronic apparatus comprises the display device (1) according to any of claim 1 to claim 14.
